# FASCICULE DE BREVET EUROPEEN

(11) **EP 4 218 998 B1**
(45) Date de publication et mention de la délivrance du brevet: **04.09.2024**
(21) Numéro de dépôt: 23151802.8
(22) Date de dépôt: 16.01.2023
(51) Int. Cl.: B01J 8/00, B01J 19/00, B01J 19/32, B65D 61/00

(54) **VIROLE D'UNE COLONNE DE SÉPARATION GAZ/LIQUIDE**
MANTELRING EINER GAS-FLÜSSIGKEITS-TRENNSÄULE
SHROUD FOR A GAS/LIQUID SEPARATION COLUMN

(30) Priorité: 01.02.2022 FR 2200895
(43) Date de publication de la demande: 02.08.2023
(73) Titulaire: L'Air Liquide, Société Anonyme pour l'Etude et l'Exploitation des Procédés Georges Claude, 75007 Paris (FR)
(72) Inventeur: FAUCHER, Vincent, 94503 CHAMPIGNY SUR MARNE (FR); DOS REIS, Manuel, 94407 VITRY SUR SEINE (FR); MARET, Vincent, 94407 VITRY SUR SEINE (FR); TORBADO, Luis, 94407 VITRY SUR SEINE (FR); APPEL, Alain, 94407 VITRY SUR SEINE (FR); BIRET, Eric, 94407 VITRY SUR SEINE (FR); LECLERC, Laurent, 94407 VITRY SUR SEINE (FR)
(74) Mandataire: Air Liquide

(56) Documents cités:
- FR-A- 1 345 040
- FR-A1- 2 827 527
- US-A- 2 685 964
- US-A1- 2014 131 349

## Description

La présente invention se rapporte au domaine des colonnes de séparation gaz/liquide et à leur assemblage et elle concerne plus particulièrement un procédé d'installation d'un tronçon de garnissage dans une virole afin de former ces dites colonnes de séparation gaz/liquide.

Les colonnes de séparation gaz/liquide sont connues depuis de nombreuses années et permettent par exemple de réaliser une séparation de différents éléments chimiques entrant dans la composition d'un fluide homogène, par exemple par distillation ou par absorption.

La fabrication d'une colonne de séparation gaz/liquide comprend notamment une étape d'insertion d'une pluralité de tronçons de garnissage au sein d'une virole. Les tronçons de garnissages sont notamment utilisés dans les colonnes pour assurer l'échange de matière et de chaleur entre un gaz montant et un liquide descendant. Ces tronçons de garnissage, qui sont notamment constitués par une superposition de plusieurs bandes ondulées, sont souvent appelés "packs". Les tronçons de garnissage sont classiquement empilés les uns sur les autres, le cas échéant avec des séparateurs interposés, afin de participer à la séparation des composants du fluide sur la dimension axiale de la colonne.

FR2827527A1 décrit une virole dans laquelle des tronçons de garnissage sont insérés selon le préambule de la revendication 1.

Il est connu de procéder à l'insertion des tronçons de garnissage au sein d'une virole maintenue verticale, la force de gravité facilitant grandement la progression du tronçon de garnissage inséré au sein de la virole. Un tel procédé peut toutefois s'avérer contraignant lorsque les colonnes de séparation gaz/liquide à assembler présentent un diamètre important et une dimension axiale nécessitant la mise en oeuvre de viroles de grande longueur, de l'ordre de plusieurs dizaines de mètres. En effet, de tels procédés avec une insertion verticale des tronçons de garnissage nécessitent alors un outillage apte à soulever les tronçons de garnissage sur une grande distance afin de les mettre en regard de l'extrémité de la virole ainsi qu'un site de production présentant une hauteur de plafond supérieure à la longueur de la virole.

Il est donc souhaité, pour les viroles de longueur élevée, de prévoir un procédé d'assemblage dans lequel l'insertion des tronçons de garnissage est effectuée avec la virole agencée à l'horizontale. Une telle position rend difficile l'insertion des tronçons de garnissage du fait que ladite insertion nécessite une force de poussée considérable sur l'ensemble de la longueur de la virole, la gravité n'intervenant plus comme force d'accompagnement du mouvement du tronçon de garnissage au sein de la virole.

Cette force de gravité peut même entraîner une légère déformation de la virole et rendre compliqué d'une part le centrage du tronçon de garnissage par rapport à une ouverture d'entrée de la virole en regard de laquelle le tronçon de garnissage doit être positionné avant d'être poussé à l'intérieur de cette virole, et d'autre part le glissement du tronçon de garnissage dans le logement de la virole.

Dans ce contexte, la présente invention a pour principal objet une virole, destinée à être équipée d'au moins un tronçon de garnissage pour une colonne de séparation gaz/liquide, comprenant au moins une paroi tubulaire s'étendant le long d'une direction longitudinale entre deux extrémités longitudinales et dont une face interne participe à délimiter un logement du tronçon de garnissage, la paroi tubulaire participant à délimiter à l'une de ses extrémités longitudinales une ouverture d'entrée, la virole comprenant une paroi de fond disposée à l'extrémité longitudinale opposée à l'ouverture d'entrée, caractérisée en ce que la virole comprend au moins un premier dispositif de cerclage et au moins un deuxième dispositif de cerclage disposés annulairement autour de la paroi tubulaire de la virole en étant en contact avec une face externe de la paroi tubulaire, le premier dispositif de cerclage comprenant au moins une zone de liaison avec un système de déplacement de la virole, le deuxième dispositif de cerclage présentant une dimension longitudinale inférieure à une dimension longitudinale du premier dispositif de cerclage.

La virole prend avantageusement et globalement une forme cylindrique s'étendant le long de la direction longitudinale, cette dernière étant parallèle à l'axe de révolution dudit cylindre. On comprend de ce qui précède, et du montage à l'horizontal de la virole, que la direction longitudinale est sensiblement parallèle au sol sur lequel est installée la virole lors du procédé d'installation du tronçon de garnissage. Cette disposition particulière de la virole par rapport au sol facilite l'insertion de tronçon de garnissage lorsque la virole présente une longueur, mesurée le long d'une direction parallèle à la direction longitudinale L, et un diamètre, correspondant au diamètre du cylindre, égaux et/ou supérieurs à une dizaine de mètres par exemple.

On comprend ici que la direction longitudinale L correspond à la direction d'extension principale de la virole, et plus particulièrement à l'axe de révolution de la virole, que la virole soit disposée horizontalement ou verticalement.

Chacun des dispositifs de cerclage sert à assurer la rotondité de la virole, notamment éviter de bloquer les tronçons de garnissage lors de leur insertion à l'intérieur de la virole.

La dimension longitudinale de chacun des dispositifs de cerclage correspond à la dimension dudit dispositif de cerclage la plus grande mesurée le long d'une direction parallèle à la direction longitudinale L. Cette dimension longitudinale est par ailleurs mesurée entre les deux bords d'extrémité longitudinale d'un même dispositif de cerclage. La distinction des dispositifs de cerclage en fonction de leur dimension longitudinale est notamment importante du fait que le ou les dispositifs de cerclage présentant la dimension longitudinale la plus grande peut assurer une fonction additionnelle à la fonction de mise en rotondité.

La virole comporte ces dispositifs de cerclage au moins pendant la durée de l'installation des tronçons de garnissage au sein de la virole. Ces dispositifs de cerclage peuvent ensuite rester à demeure autour de la virole ou bien être retirés en vue de l'utilisation de cette virole pour une colonne de séparation gaz/liquide.

Selon une caractéristique de l'invention, la dimension longitudinale de l'au moins un deuxième dispositif de cerclage est au moins deux fois inférieure à la dimension longitudinale correspondante du premier dispositif de cerclage.

Selon une caractéristique optionnelle de l'invention, la dimension longitudinale du premier dispositif de cerclage est comprise entre 200mm et 300mm et peut être de l'ordre de 240mm.

Selon une caractéristique optionnelle de l'invention, la dimension longitudinale du deuxième dispositif de cerclage est comprise entre 10mm et 20mm et peut être de l'ordre de 15mm.

Selon une caractéristique optionnelle de l'invention, le premier dispositif de cerclage et le deuxième dispositif de cerclage sont distincts l'un de l'autre et sont avantageusement disposés à distance l'un de l'autre. Chacun de ces dispositifs de cerclage est par ailleurs au moins partiellement en contact avec ladite face externe. On comprend ici que le premier dispositif de cerclage et le deuxième dispositif de cerclage ont au moins pour fonction d'assurer la rotondité de la virole, pour éviter de bloquer les tronçons de garnissage à l'intérieur de la virole durant la phase d'insertion. Le dispositif de cerclage le plus large, ici le premier dispositif de cerclage, sert à la fois à la mise en rotondité de la virole et il permet de supporter la virole lorsque celle-ci se retrouve dans une position couchée, à l'horizontal, lors de la phase d'insertion.

Selon une caractéristique optionnelle de l'invention, au moins l'un des dispositifs de cerclage est configuré pour coopérer avec un dispositif de support de la virole. Plus particulièrement, tous les dispositifs de cerclage d'un même type, ici les premiers dispositifs de cerclage de dimension longitudinale supérieure à celle des deuxièmes dispositifs de cerclage, sont destinés à coopérer avec un dispositif de support. De la sorte, on distingue les premiers dispositifs de cerclage des deuxièmes dispositifs de cerclage en ce que, alors que tous ont une fonction de maintien de rotondité, seuls les premiers dispositifs de cerclage ont pour fonction additionnelle de coopérer avec des moyens de support de la virole, qui peuvent le cas échéant permettre un déplacement en translation de la virole et une rotation de la virole sur elle-même.

Selon une autre caractéristique optionnelle de l'invention, le dispositif de support comprend au moins un moyen de roulement apte à être coopérer avec le premier dispositif de cerclage correspondant pour guider la rotation de la virole autour de la direction longitudinale.

Selon une autre caractéristique optionnelle de l'invention, la paroi tubulaire est formée de plusieurs portions de paroi agencées les unes à la suite des autres le long de la direction longitudinale, au moins deux portions de paroi successives formant entres elles une zone de contact, un des deuxièmes dispositifs de cerclage étant disposé autour de cette zone de contact.

Le deuxième dispositif de cerclage participe ainsi à maintenir la rotondité de la paroi tubulaire de la virole dans une zone, à savoir la zone de contact entre deux modules successifs formant cette paroi tubulaire, qui est particulièrement sensible à la déformation de la virole due à la gravité.

Selon une autre caractéristique optionnelle de l'invention, au moins une portion de paroi est soudée à au moins une autre portion de paroi adjacente, le deuxième dispositif de cerclage étant disposé autour de la zone de contact entre lesdites portions de paroi adjacentes réunies par un cordon de soudure.

Selon une autre caractéristique optionnelle de l'invention, un deuxième dispositif de cerclage est installé autour de chacune des zones de contact formé d'une extrémité longitudinale à l'autre de la virole.

Selon une autre caractéristique optionnelle de l'invention, chaque portion de paroi est soudée à au moins une autre portion de paroi voisine, un deuxième dispositif de cerclage étant disposé autour des soudures entre lesdites portions de paroi.

Selon une autre caractéristique optionnelle de l'invention, un des deuxièmes dispositifs de cerclage est installé au moins à proximité de l'ouverture d'entrée de la virole. Il convient de noter que l'extrémité longitudinale de la virole au niveau de laquelle est réalisée l'ouverture d'entrée consiste en une zone de la virole particulièrement fragile et qui peut subir facilement une déformation sous l'effet du poids de la virole. Ces déformations sont d'autant plus préjudiciables qu'elles peuvent empêcher l'insertion d'un tronçon de garnissage dans la virole. La présence d'un dispositif de cerclage, et particulièrement d'un deuxième dispositif de cerclage dont la dimension longitudinale permet de conférer uniquement une fonction de maintien de rotondité, au niveau de cette extrémité longitudinale permet de soutenir la paroi tubulaire à l'ouverture d'entrée et d'assurer une rotondité suffisante de l'ouverture d'entrée pour que les tronçons de garnissage puissent être insérés sans entrer en contact avec la paroi tubulaire et risquer de la déformer sous l'effort de poussée.

Selon une autre caractéristique optionnelle de l'invention, une face interne de l'un et/ou l'autre des dispositifs de cerclage s'inscrit dans un cercle de diamètre supérieur au diamètre du cercle dans lequel s'inscrit la face externe de la paroi tubulaire. Il convient de comprendre que le dispositif de cerclage correspondant est au plus près de la paroi tubulaire formant la virole, avantageusement à son contact, pour assurer la rotondité de la virole.

Selon une autre caractéristique optionnelle de l'invention, le premier dispositif de cerclage comporte deux murets radiaux reliés l'un à l'autre par une bande centrale, les murets radiaux faisant saillie radialement depuis la bande centrale vers l'extérieur de la virole. En d'autres termes, une section du premier dispositif de cerclage, vue dans un plan dans lequel s'inscrit la direction longitudinale, prend une forme de « U », les murets radiaux représentant les bras du « U » tandis que la bande centrale représente la base du « U ». Cette forme de « U » participe à former une glissière dans laquelle un système de guidage peut être bloqué longitudinalement. En d'autres termes, au moins un des murets radiaux forme une butée longitudinale au système d'entraînement, aussi bien pour l'entraînement longitudinal de la virole que pour éviter que le système d'entraînement ne se déloge de la glissière lorsque la virole est entraînée en rotation autour de son axe de révolution.

Selon une autre caractéristique optionnelle de l'invention, l'un et/ou l'autre des dispositifs de cerclage comprend plusieurs parties rendues solidaires l'une par rapport à l'autre par un dispositif de serrage, les deux parties étant mobiles entre une position ouverte du dispositif de cerclage où les deux parties sont éloignées l'une de l'autre et une position fermée du dispositif de cerclage dans laquelle les deux parties encerclent la virole en étant au moins en partie en contact avec la paroi tubulaire de la virole.

La position ouverte du dispositif de cerclage permet d'écarter les parties du dispositif de cerclage pour venir se positionner autour de la virole, à distance de la paroi tubulaire, au début du montage de l'un et/ou des dispositifs de cerclage sur cette virole, et la position fermée du dispositif de cerclage correspond à la position prise par les deux parties une fois le dispositif de cerclage correspondant installé autour de la virole.

Selon une autre caractéristique optionnelle de l'invention, le dispositif de serrage est réglable pour ajuster la position l'une par rapport à l'autre des deux parties mobiles dans la position fermée du dispositif de cerclage. Ainsi on s'assure que dans la position fermée, chacune des parties du dispositif de cerclage soit plaquée le mieux possible contre la paroi tubulaire de la virole, de manière à éviter au maximum les déformations de rotondité de la virole dans sa position à l'horizontale. On comprend qu'un dispositif de serrage est disposé à la jonction de deux parties mobiles adjacentes. Dans le cas où le dispositif de cerclage est formé par deux parties mobiles, il peut être prévu deux dispositifs de serrage diamétralement opposés, qui assurent respectivement la fixation d'une extrémité d'une première partie du dispositif de cerclage avec une extrémité d'une deuxième partie du dispositif de cerclage. Il peut également être prévu un seul dispositif de serrage qui est diamétralement opposé à une charnière reliant de manière permanente les deux parties du dispositif de cerclage. Dans ce dernier cas, les deux parties mobiles sont dites articulées et leur extrémité fixée par le dispositif de serrage consiste en l'extrémité libre opposée à la charnière.

Selon une autre caractéristique optionnelle de l'invention, la virole comprend plusieurs premiers dispositifs de cerclage et plusieurs deuxièmes dispositifs de cerclage installés en alternance longitudinalement les uns à la suite des autres. On s'assure ainsi de la présence régulière de dispositifs permettant de maintenir la rotondité puisque chacun des types de dispositif de cerclage présente au moins cette fonction, et on s'assure dans le même temps d'un positionnement régulier de dispositifs de cerclage aptes par ailleurs à assurer une fonction de guidage de la virole.

Selon une autre caractéristique optionnelle de l'invention, la virole comprend un cône amovible et/ou un berceau installé à l'ouverture d'entrée de la virole et configuré pour aider à l'installation du tronçon de garnissage dans la virole, le deuxième dispositif de cerclage disposé au voisinage de l'ouverture d'entrée étant décalé longitudinalement pour ne pas recouvrir une zone de fixation entre la virole et le dispositif d'aide à l'installation formé par le cône amovible et/ou le berceau.

La présente invention concerne une colonne de séparation gaz/liquide comprenant une virole équipée d'au moins un tronçon de garnissage, l'au moins un tronçon ayant été inséré dans une virole telle que décrite ci-dessus.

La présente invention concerne également un procédé d'installation d'un tronçon de garnissage pour une colonne de séparation gaz/liquide dans une virole caractérisée selon l'une quelconque des caractéristiques précédentes, le procédé comprenant au moins une étape de montage du premier dispositif de cerclage et du deuxième dispositif de cerclage, et au moins une étape d'installation du tronçon de garnissage dans le logement de la virole réalisée à la suite de l'étape de montage du premier dispositif de cerclage et du deuxième dispositif de cerclage.

Selon une autre caractéristique optionnelle de l'invention, la virole s'étend verticalement au cours de l'étape de montage du premier dispositif de cerclage et du deuxième dispositif de cerclage, la virole s'étendant horizontalement au cours de l'étape d'installation du tronçon de garnissage.

De cette façon, la rotondité de la colonne est assurée dès sa mise en position horizontale.

L'invention concerne une colonne de séparation gaz/liquide comprenant une virole équipée d'au moins un tronçon de garnissage, l'au moins un tronçon ayant été installé selon le procédé décrit ci-dessus.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] est une représentation en perspective d'une virole selon l'invention, équipée de premiers dispositifs de cerclage et de deuxièmes dispositifs de cerclage disposés en alternance le long de la dimension longitudinale de la virole ;
[Fig. 2] est une représentation vue de face d'un des dispositifs de cerclage représentés sur la figure 1, ici en position ouverte et selon un premier mode de réalisation ;
[Fig. 3] est une représentation vue de face d'un des dispositifs de cerclage représentés sur la figure 1, ici en position fermée et selon un deuxième mode de réalisation ;
[Fig. 4] est une vue en coupe, dans un plan perpendiculaire à la direction longitudinale de la virole, du dispositif de cerclage représenté sur la figure 3 et installé autour de la virole ;
[Fig. 5] est une représentation vue de côté de la virole représentée sur la figure 1, au cours d'une étape d'un procédé d'installation selon l'invention dans laquelle un tronçon de garnissage est inséré dans la virole.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

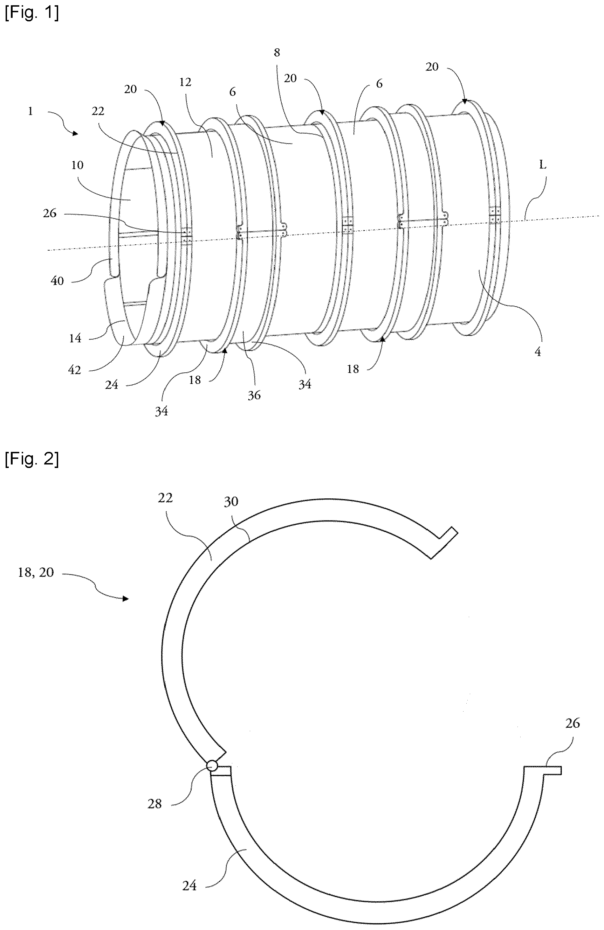

Sur la figure 1 est illustrée une virole 1 selon l'invention destinée à accueillir au moins un tronçon de garnissage pour une colonne de séparation gaz/liquide. La virole 1 est notamment disposée à l'horizontale lors d'une installation d'un tronçon de garnissage dans une virole 1, et elle comporte des moyens aptes à diminuer de façon astucieuse le risque de déformation de la virole 1 lors de ladite installation.

La virole 1 s'étend principalement le long d'une direction longitudinale L en présentant ainsi deux extrémités longitudinales. La virole 1 est positionnée horizontalement lors de l'installation du tronçon de garnissage, c'est-à-dire que la direction longitudinale L s'étend sensiblement parallèlement au sol sur lequel est installée la virole 1.

Plus particulièrement, la virole 1 comprend au moins une paroi tubulaire 4, qui s'étend principalement le long de la direction longitudinale L en prenant globalement la forme d'un cylindre droit, la direction longitudinale L correspondant ici à la direction principale d'extension de la paroi tubulaire 4 et à son axe de révolution. En d'autres termes, une section de la paroi tubulaire 4 vue dans un plan perpendiculaire à la direction longitudinale L s'inscrit sensiblement dans un cercle.

La paroi tubulaire 4 est avantageusement formée de plusieurs portions de paroi 6 agencées les unes à la suite des autres le long de la direction longitudinale L, au moins deux portions de paroi 6 successives formant entres elles une zone de contact 8. On comprend que ces portions de paroi 6 forment chacune un module tubulaire s'alignant avec les modules tubulaires formés par les autres portions de paroi 6 de sorte à former la virole 1.

Selon un mode de réalisation préféré de l'invention, au moins une portion de paroi 6 est soudée, à l'une de ses extrémités longitudinales, à au moins une autre portion de paroi 6 directement adjacente. Avantageusement, chacune des portions de paroi 6 est soudée aux portions de paroi 6 qui lui sont directement adjacentes.

La paroi tubulaire 4 présente une face interne 10 orientée vers l'intérieur de la virole 1 et une face externe 12 tournée vers l'extérieur de la virole 1. La face interne 10 de la paroi tubulaire 4 participe à délimiter un logement 13 d'au moins un tronçon de garnissage.

La paroi tubulaire 4 participe à délimiter une ouverture d'entrée 14 à l'une des extrémités longitudinales de la virole 1. L'ouverture d'entrée 14 correspond à l'ouverture par laquelle sont insérés les tronçons de garnissage dans la virole 1.

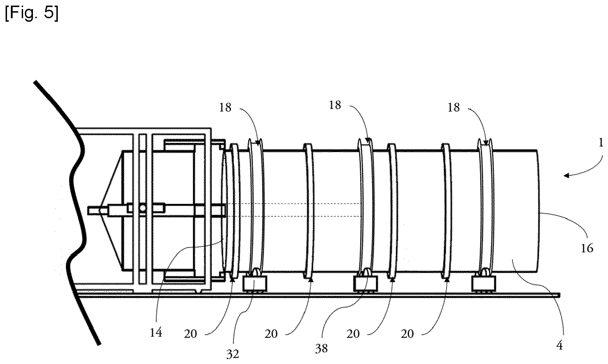

La virole 1 comprend une paroi de fond 16, visible sur la figure 5, disposée à l'autre extrémité longitudinale de la virole 1, c'est-à-dire à l'opposé de l'ouverture d'entrée 14. Au moins le premier tronçon de garnissage installé dans la virole 1 est positionné au voisinage de la paroi de fond 16, le cas échéant contre la paroi de fond 16.

Le tronçon de garnissage prend globalement la forme d'un corps cylindrique apte à être installé dans le logement 13 de la paroi tubulaire 4. Autrement dit, le tronçon de garnissage présente un bord périphérique dont le profil, vu dans un plan perpendiculaire à la direction longitudinale L, est un cercle dont le diamètre est égal ou sensiblement inférieur au diamètre de la virole 1 au niveau de la face interne 10 de la paroi tubulaire 4.

Tel que cela a pu être évoqué précédemment, un tronçon de garnissage pour une colonne de séparation gaz/liquide est notamment constitué par une superposition de plusieurs bandes ondulées et entrecroisées et l'empilement de ces tronçons au sein d'une virole 1 permet d'assurer, lors du fonctionnement de la colonne de séparation gaz/liquide comportant cette virole 1, l'échange de matière et de chaleur entre un gaz montant et un liquide descendant. Les tronçons de garnissage sont classiquement empilés les uns sur les autres, le cas échéant avec des séparateurs interposés. L'obtention d'une colonne de séparation passe ainsi par l'insertion de tronçons de garnissage au sein de la virole 1 les uns après les autres, via un dispositif d'insertion approprié au cours d'un procédé d'installation de tronçons de garnissage.

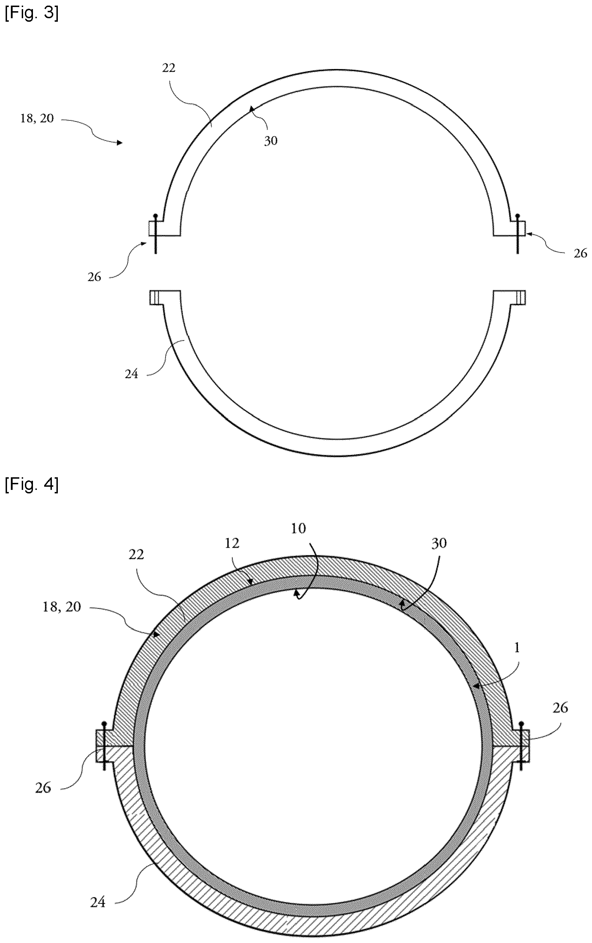

Selon l'invention, la virole 1 comprend au moins un premier dispositif de cerclage 18 et au moins un deuxième dispositif de cerclage 20 disposés autour de la paroi tubulaire 4 de la virole 1 en étant en contact avec une face externe 12 de la paroi tubulaire 4 comme représenté sur la figure 1 et 4. On comprend que chacun des dispositifs de cerclage 18, 20 est installé autour de la virole 1, c'est-à-dire en prenant une forme annulaire entourant la paroi tubulaire 4 de la virole 1 et dont l'axe est sensiblement confondu avec l'axe de révolution longitudinal de la virole.

Chacun de ces dispositifs de cerclage 18, 20 est au moins partiellement en contact avec la face externe 12 de la virole 1 afin d'assurer la rotondité de la virole 1. Plus particulièrement, le premier dispositif de cerclage 18 et le deuxième dispositif de cerclage 20 sont avantageusement en contact avec la face externe 12 de la paroi tubulaire 4 sur l'ensemble du pourtour de la virole 1. Ainsi, le premier dispositif de cerclage 18 et le deuxième dispositif de cerclage 20 interviennent chacun au moins pour assurer la rotondité de la virole 1. On comprend que les dispositifs de cerclage participent à maintenir la forme cylindrique de la virole 1 en limitant les déformations pouvant être subie par la virole 1 durant l'installation du tronçon de garnissage.

Tel que particulièrement visible sur les figures 1 et 5, la virole 1 comprend plusieurs premiers dispositifs de cerclage 18 et plusieurs deuxièmes dispositifs de cerclage 20 disposés en alternance longitudinalement les uns à la suite des autres. En d'autres termes, un des premiers dispositifs de cerclage 18 est disposé entre deux deuxièmes dispositifs de cerclage 20 et/ou un des deuxièmes dispositifs de cerclage 20 est disposé entre deux premiers dispositifs de cerclage 18, le long de la direction longitudinale L. Encore plus avantageusement, chacun des premiers dispositifs de cerclage 18, respectivement chacun des deuxièmes dispositifs de cerclage 20, est encadré longitudinalement par au moins un deuxième dispositif de cerclage 20, respectivement au moins un premier dispositif de cerclage 18.

La virole est notamment particulière en ce qu'elle présente deux types de dispositifs de cerclage qui se distinguent l'un par rapport à l'autre, par leur forme et notamment par leur dimension longitudinale. Plus particulièrement, et tel que cela est visible sur les figures 1 et 5, le deuxième dispositif de cerclage 20 présente une dimension longitudinale inférieure à une dimension longitudinale du premier dispositif de cerclage 18. On comprend ainsi qu'une première caractéristique différenciante entre le premier dispositif de cerclage 18 et le deuxième dispositif de cerclage 20 est relative à leur dimension longitudinale. La dimension longitudinale de chacun des dispositifs de cerclage 18, 20 correspond ici à la dimension dudit dispositif de cerclage 18, 20 la plus grande mesurée le long d'une direction parallèle à la direction longitudinale L. Autrement dit, l'écartement entre des bords d'extrémité longitudinale du premier dispositif de cerclage 18 est supérieure à l'écartement entre des bords d'extrémité longitudinale du deuxième dispositif de cerclage 20.

Tel que cela va être évoqué ci-après, la dimension longitudinale diffère d'un type de dispositif de cerclage à l'autre du fait d'une différence de fonctions associées à chaque type de dispositif de cerclage.

La dimension longitudinale du premier dispositif de cerclage 18 peut notamment être comprise entre 200mm et 300mm et plus particulièrement être d'au moins 240mm. Il convient toutefois de noter que la dimension longitudinale du premier dispositif de cerclage 18 peut varier en fonction des dimensions de la virole 1 de sorte qu'une virole 1 ayant des dimensions inférieures à celles d'une autre virole pourrait être équipée de dispositifs de cerclage de dimensions longitudinales différentes de celles des dispositifs de cerclage destinés à équiper l'autre virole.

En d'autres termes, le premier dispositif de cerclage forme une bande de roulement sur laquelle est susceptible de rouler des moyens de guidage et/ou de support de la virole.

La dimension longitudinale du deuxième dispositif de cerclage 20 peut notamment être comprise entre 10mm et 20mm, et plus particulièrement être de 15mm. Similairement à ce qui a été mentionné auparavant à propos du premier dispositif de cerclage 18, la dimension longitudinale du deuxième dispositif de cerclage 20 peut également varier en fonction des dimensions de la virole 1.

En d'autres termes, le deuxième dispositif de cerclage 20 consiste en un anneau dont l'épaisseur, ici déterminée par la dimension longitudinale évoquée, est inférieure à la hauteur, c'est-à-dire la dimension radiale, perpendiculaire à l'axe du dispositif de cerclage.

Le premier dispositif de cerclage 18 et le deuxième dispositif de cerclage 20 sont distincts l'un de l'autre et sont avantageusement disposés à distance l'un de l'autre. On comprend ici que, d'une part, le premier dispositif de cerclage 18 et le deuxième dispositif de cerclage 20 ne coopèrent par mécaniquement l'un avec l'autre, et que d'autre part, le premier dispositif de cerclage 18 n'est pas en contact avec un bord d'extrémité longitudinale d'un deuxième dispositif de cerclage 20 adjacent.

Tel que cela a été évoqué, chacun des dispositifs de cerclage 18, 20 est destiné à être au contact, au moins en partie et avantageusement sur tout le pourtour de la virole 1, avec la face externe 12 de la paroi tubulaire 4.

A cet effet, l'un et/ou l'autre des dispositifs de cerclage 18, 20 comprend plusieurs parties 22, 24 distinctes, ici au nombre de deux, susceptibles d'être mobiles l'une par rapport à l'autre et rendues solidaires pour former le dispositif de cerclage correspond par au moins un dispositif de serrage 26. Plus particulièrement, les parties 22, 24 peuvent prendre une position ouverte du dispositif de cerclage où les parties 22, 24 sont éloignées l'une de l'autre et le dispositif de serrage 26 n'est pas mis en oeuvre, comme visible sur la figure 2 ou la figure 3, et une position fermée du dispositif de cerclage dans laquelle les parties 22, 24 encerclent la virole 1, rendues solidaires l'une de l'autre par l'au moins un dispositif de serrage comme visible sur la figure 4.

La position ouverte du dispositif de cerclage correspond ici à la position prise par les parties 22, 24 d'un même dispositif de cerclage au début du montage de celui-ci sur la virole, l'écartement de ces parties l'une par rapport à l'autre permettant de venir se positionner autour de la paroi tubulaire de la virole contre laquelle les parties sont destinées à être au contact.

Dans un premier mode de réalisation, illustré sur la figure 2, les deux parties 22, 24 formant un même dispositif de cerclage sont articulées par l'intermédiaire d'une charnière 28 et le dispositif de cerclage correspondant comprend un unique dispositif de serrage 26 configuré pour rendre solidaires l'une de l'autre les deux parties 22, 24 lorsque le dispositif de cerclage 18, 20 est en position fermée. Le dispositif de serrage 26 est un dispositif réglable pour pouvoir adapter le serrage de chacune des parties 22, 24 par rapport à l'autre partie et adapter la force de placage des parties contre la face externe 12 de la virole 1.

Dans ce cas, le dispositif de serrage 26 est disposé à une extrémité libre de chacune des parties 22, 24 opposée à l'extrémité de ladite partie 22, 24 où est installée la charnière 28.

Dans un deuxième mode de réalisation, notamment illustré sur la figure 3, les deux parties 22, 24 sont distinctes l'une de l'autre et ne sont pas reliées par une charnière à une de leur extrémité. Les parties 22, 24 d'un même dispositif de cerclage peuvent ainsi être amenées en regard de la paroi tubulaire 4 de la virole 1 de manière indépendante l'une de l'autre, ce qui facilite la mise en position autour de la virole dans des environnements qui peuvent être encombrés. Il est dans ce cas prévu deux dispositifs de serrage 26, ici diamétralement opposés, chaque dispositif de serrage étant réglable. Là encore, l'utilisation du dispositif de serrage 26 réglable permet de fixer l'une à l'autre les parties d'un même dispositif de cerclage en s'assurant que la face interne 30 du dispositif de cerclage 18, 20 soit bien plaquée contre la face externe 12 de la paroi tubulaire 4.

Le dispositif de réglage 26 peut notamment comporter des brides de serrage rendues respectivement solidaires d'une extrémité des parties du dispositif en cerclage destinées à être rendues solidaires et une ou plusieurs vis de serrage permettant de moduler la force de serrage en fonction du contact des parties avec la paroi tubulaire. Notamment, les brides de serrage peuvent être venues de matière avec les parties formant le dispositif de cerclage.

Quel que soit le mode de réalisation mis en oeuvre, et donc quel que soit le nombre de dispositifs de serrage, il convient de noter que la fonction de chaque dispositif de serrage est d'assurer le rapprochement des deux parties du dispositif de cerclage l'une de l'autre pour que la face interne 30 du dispositif de cerclage 18, 20 correspondant soit en contact sur la plus grande surface possible avec la face externe 12 de la virole 1.

Une fois le dispositif de cerclage 18, 20 monté sur la virole par serrage de ces deux parties 22, 24 l'une par rapport à l'autre, une face interne 30 de ce dispositif de cerclage 18, 20 s'inscrit dans un cercle de diamètre sensiblement égal au diamètre du cercle dans lequel s'inscrit la face externe 12 de la paroi tubulaire 4.

Tel qu'évoqué précédemment, la dimension longitudinale d'un premier dispositif de cerclage 18 est supérieure à celle d'un deuxième dispositif de cerclage 20, et notamment au moins deux fois supérieure. De la sorte, en plus de sa fonction de maintien de rotondité de la virole 1, chaque premier dispositif de cerclage 18 participe également à coopérer avec un dispositif de support 32 de la virole 1, visible notamment sur la figure 5 et qui permet de positionner la virole à distance du sol lors de l'insertion des tronçons de garnissage, qui peut permettre le déplacement en translation de la virole le long du sol de l'atelier et peut permettre le cas échéant de faire tourner la virole sur elle-même autour de son axe de révolution longitudinal. A cet effet, le premier dispositif de cerclage 18 prend une forme de bande annulaire, en présentant deux murets radiaux 34 reliés l'un à l'autre par une bande centrale 36, les murets radiaux 34 faisant saillie radiale, vers l'extérieur de la virole 1, de la bande centrale 36 à chaque extrémité longitudinale de cette bande. En d'autres termes, le premier dispositif de cerclage 18 prend une forme de glissière annulaire en présentant une section en forme de « U » vue dans un plan dans lequel s'inscrit la direction longitudinale L, les murets radiaux 34 représentant les montants du « U » tandis que la bande centrale 36 représente la base du « U ».

La bande centrale 36 est ainsi délimitée longitudinalement par les murets radiaux et la glissière ainsi formée est dimensionnée pour loger le dispositif de support 32 de la virole 1.

Le dispositif de support 32 peut être porté par un chariot pour permettre le déplacement en translation de la virole, le cas échéant le long de rails présents dans l'atelier où l'installation des tronçons de garnissage va avoir lieu.

Le dispositif de support 32 comprend plus particulièrement au moins un moyen de roulement 38 coopérant avec le premier dispositif de cerclage 18, c'est-à-dire venant se loger au moins en partie dans la glissière précédemment évoquée et délimitée notamment par chacun des murets radiaux 34 et par la bande centrale 36. On comprend que la virole disposée horizontalement vient reposer sur chacun des dispositifs de support, avec plus particulièrement, la bande centrale 36 de chaque premier dispositif de cerclage 18 qui vient reposer contre la périphérie du moyen de roulement 38 d'un dispositif de support correspondant. Le moyen de roulement 38 est monté libre en rotation de sorte qu'il guide la rotation sur elle-même de la virole, qui peut être jugée nécessaire par un opérateur entre l'insertion de deux tronçons de garnissage successifs pour adapter la position relative des tronçons de garnissage les uns par rapport aux autres au sein de la virole 1 et optimiser ainsi la séparation gaz/liquide destinée à être mise en oeuvre au sein de la virole une fois tous les tronçons de garnissage installés.

Dans cette disposition à glissière, délimitée longitudinalement par les murets radiaux 34 du premier dispositif de cerclage 18, au moins un muret radial 34 forme une butée longitudinale au déplacement du dispositif de support 32. De la sorte, l'un et/ou l'autre des murets radiaux d'un premier dispositif de cerclage permet d'éviter l'échappement du moyen de roulement 38 lors de la rotation de la virole sur elle-même, et permet d'entraîner en translation l'ensemble de la virole par appui de chaque moyen de roulement contre l'un des murets radiaux du premier dispositif de cerclage correspondant.

Au moins un dispositif de cerclage, ici un deuxième dispositif de cerclage 20, est disposé autour d'une des zones de contact 8 formées entre deux portions de paroi 6 de la paroi tubulaire 4 de la virole 1. On comprend que la fonction de ce deuxième dispositif de cerclage 20 est uniquement de participer au maintien de la rotondité de la virole 1, et que l'installation dudit deuxième dispositif de cerclage 20 autour de la zone de contact 8 optimise le maintien de la rotondité de la virole 1 dans son ensemble dans une zone particulièrement sensible à un potentiel affaissement local dû à la gravité.

Notamment, la zone de contact 8 peut consister en un cordon de soudure réalisé entre deux portions de parois successives et le dispositif de cerclage, ici le deuxième dispositif de cerclage 20, est disposé autour du cordon de soudure entre les deux portions de paroi 6.

Avantageusement, un deuxième dispositif de cerclage 20 est installé autour de chacune des zones de contact 8. Cette disposition astucieuse des deuxièmes dispositifs de cerclage 20 permet de s'assurer du maintien en rotondité de la virole 1 en différents points sensibles de cette virole.

De manière alternative ou complémentaire, un des deuxièmes dispositifs de cerclage 20 est installé à proximité de l'extrémité longitudinale de la virole 1 participant à délimiter l'ouverture d'entrée 14. Notamment, un tel deuxième dispositif de cerclage, peut être disposé entre 50 et 150mm de l'ouverture d'entrée. Conformément à ce qui a pu être évoqué pour les zones de contact 8, l'ouverture d'entrée 14 est une des zones de la virole 1 qui est la plus susceptible de subir des déformations de sa rotondité. Disposer un dispositif de cerclage dans cette zone permet ici de maintenir la forme circulaire théorique de la paroi tubulaire 4 au niveau de l'ouverture d'entrée 14 et ainsi de diminuer les risques qu'un tronçon de garnissage entre en contact du bord de la paroi tubulaire délimitant l'ouverture d'entrée 14.

Il résulte de ce qui précède qu'on place avantageusement un dispositif de cerclage, et notamment un deuxième dispositif de cerclage ayant pour unique fonction le maintien de la rotondité de la virole, au niveau de chaque extrémité d'une portion de paroi 6 de la paroi tubulaire 4, ces extrémités formant des zones fragiles de la virole susceptibles de plus rapidement s'affaisser et générer une gêne à l'insertion des tronçons de garnissage. Seule l'extrémité d'une portion de paroi 6 correspondant à la paroi de fond 16 de la virole 1 n'est pas entourée par un dispositif de cerclage, la paroi de fond empêchant l'affaissement de la virole sous son propre poids et la perte de sa rotondité.

Il peut ainsi être noté que l'on peut disposer avantageusement les différents types de dispositifs de cerclage les uns par rapport aux autres en fonction de leur position le long de la virole, et plus particulièrement en fonction de la portion de la virole au contact de laquelle ils se trouvent. Des dispositifs de cerclage n'ayant pour fonction que le maintien de la rotondité et qui ne vont pas subir de contraintes imposées par un dispositif de support lors du déplacement en rotation ou en translation de la virole, sont ainsi plus à même d'être disposés au contact des zones les plus fragiles de la virole, que ce soient les zones de contact 8 précédemment évoquées ou l'ouverture d'entrée 14.

Par ailleurs, et tel que visible sur la figure 1, la virole 1 peut comprendre un cône amovible 40 et/ou un berceau 42 installés à l'ouverture d'entrée 14 de la virole 1 et configurés pour respectivement aider à l'installation d'un tronçon de garnissage dans la virole 1. Le cône amovible 40 participe à guider radialement le tronçon de garnissage à insérer pour qu'il se présente de manière coaxiale à l'entrée de la virole, et le berceau 42 est configuré pour former un support sur lequel reposer le tronçon de garnissage avant insertion dans la virole. Dans un tel cas, le deuxième dispositif de cerclage 20 destiné à être disposé au voisinage de l'ouverture d'entrée peut présenter un léger décalage axial pour permettre des opérations de montage et de démontage de ces dispositifs d'aide à l'installation du tronçon de garnissage alors que le deuxième dispositif de cerclage est en position autour de la virole.

La présente invention concerne également un procédé d'installation d'un tronçon de garnissage dans la virole 1, le procédé comprenant au moins une étape de montage du premier dispositif de cerclage 18 et/ou du deuxième dispositif de cerclage 20, et au moins une étape d'installation du tronçon de garnissage dans le logement 13 de la virole 1 réalisée à la suite de l'étape de montage du premier dispositif de cerclage 18 et/ou du deuxième dispositif de cerclage 20. Le montage du premier dispositif de cerclage 18 et/ou du deuxième dispositif de cerclage 20 préalablement à l'installation du tronçon de garnissage est nécessaire afin que les dispositifs de cerclage puissent éviter que la paroi tubulaire 4 de la virole 1 ne déforme durant l'installation du tronçon du garnissage et ne bloque l'insertion de ce tronçon de garnissage au sein de la virole.

Il est notable que la virole 1 peut être amenée à changer de position au cours du procédé d'installation, puisque la virole 1 s'étend verticalement au cours de l'étape de montage du premier dispositif de cerclage 18 et/ou du deuxième dispositif de cerclage 20 et qu'elle s'étend horizontalement au cours de l'étape d'installation du tronçon de garnissage. L'invention s'inscrit en effet dans un contexte où l'insertion des tronçons de garnissage se fait avec une virole à l'horizontale, et il est avantageux que le montage des dispositifs de cerclage soit fait avec la virole à la verticale, pour faciliter le positionnement des deux parties d'un dispositif de cerclage de part et d'autre de la virole avant leur fixation l'une à l'autre. Toutefois, on comprend que la virole 1 peut être dans une position verticale, c'est-à-dire avec une direction longitudinale L sensiblement perpendiculaire au sol, ou dans une position horizontale, c'est-à-dire avec la direction longitudinale L sensiblement parallèle au sol, lors du montage des dispositifs de cerclage.

Tel qu'elle vient d'être décrite et illustrée, la présente invention répond bien aux objectifs qu'elle s'est fixée, à savoir proposer une combinaison de moyens permettant d'assurer la rotondité d'une virole préalablement et au cours de l'insertion de tronçons de garnissage en son sein. Il est avantageux que la virole comprenne différents types de dispositifs de cerclage qui se distinguent au moins par rapport à leur dimension longitudinale, de sorte qu'il est possible de disposer le long de la virole aussi bien un premier type de dispositifs, qui permet à la fois de maintenir la rotondité de la virole durant l'installation d'un tronçon de garnissage et qui permette la mise en position souhaitée de la virole en coopération avec un dispositif de support, qu'une deuxième type de dispositifs, qui a pour unique fonction le maintien de la rotondité et qui ne subit donc pas de contraintes de déplacement imposées par un dispositif de support, et qui peut donc être avantageusement installé au niveau des zones les plus fragiles de la virole, et notamment les zones de contact entre deux portions de paroi de la virole adjacentes et/ou l'ouverture d'entrée de la virole par laquelle sont insérés les tronçons de garnissage.

La présente invention ne saurait toutefois se limiter aux moyens et configurations décrits et illustrés ici et elle s'étend également à tout moyen et configuration équivalents ainsi qu'à toute combinaison techniquement opérante de tels moyens.

## Revendications

1. Virole (1), destinée à être équipée d'au moins un tronçon de garnissage pour une colonne de séparation gaz/liquide, comprenant au moins une paroi tubulaire (4) s'étendant le long d'une direction longitudinale (L) entre deux extrémités longitudinales et dont une face interne (10) participe à délimiter un logement (13) du tronçon de garnissage, la paroi tubulaire (4) participant à délimiter à l'une de ses extrémités longitudinales une ouverture d'entrée (14), la virole (1) comprenant une paroi de fond (16) disposée à l'extrémité longitudinale opposée à l'ouverture d'entrée (14), **caractérisée en ce que** la virole (1) comprend au moins un premier dispositif de cerclage (18) et au moins un deuxième dispositif de cerclage (20) disposés annulairement autour de la paroi tubulaire (4) de la virole (1) en étant en contact avec une face externe (12) de la paroi tubulaire (4), le premier dispositif de cerclage (18) comprenant au moins une zone de liaison avec un système de déplacement (32) de la virole (1), le deuxième dispositif de cerclage (20) présentant une dimension longitudinale inférieure à une dimension longitudinale du premier dispositif de cerclage (18).

2. Virole (1) selon la revendication précédente, dans laquelle la dimension longitudinale de l'au moins un deuxième dispositif de cerclage (20) est au moins deux fois inférieure à la dimension longitudinale correspondante du premier dispositif de cerclage (18).

3. Virole (1) selon l'une quelconque des revendications précédentes, dans laquelle la paroi tubulaire (4) est formée de plusieurs portions de paroi (6) agencées les unes à la suite des autres le long de la direction longitudinale (L), au moins deux portions de paroi (6) successives formant entres elles une zone de contact (8), un des deuxièmes dispositifs de cerclage (20) étant disposé autour de cette zone de contact (8).

4. Virole (1) selon l'une quelconque des revendications précédentes, dans laquelle un des deuxièmes dispositifs de cerclage (20) est installé au moins à proximité de l'ouverture d'entrée (14) de la virole (1).

5. Virole (1) selon l'une quelconque des revendications précédentes, dans laquelle une face interne (30) de l'un et/ou l'autre des dispositifs de cerclage (18, 20) s'inscrit dans un cercle de diamètre supérieur au diamètre du cercle dans lequel s'inscrit la face externe (12) de la paroi tubulaire (4).

6. Virole (1) selon l'une quelconque des revendications précédentes, dans laquelle le premier dispositif de cerclage (18) comporte deux murets radiaux (34) reliés l'un à l'autre par une bande centrale (36), les murets radiaux (34) faisant saillie radialement depuis la bande centrale (36) vers l'extérieur de la virole (1).

7. Virole (1) selon l'une quelconque des revendications précédentes, dans laquelle l'un et/ou l'autre des dispositifs de cerclage (18, 20) comprend plusieurs parties (22, 24) rendues solidaires l'une par rapport à l'autre par un dispositif de serrage (26), les deux parties (22, 24) étant mobiles entre une position ouverte du dispositif de cerclage où les deux parties (22, 24) sont éloignées l'une de l'autre et une position fermée du dispositif de cerclage dans laquelle les deux parties (22, 24) encerclent la virole (1) en étant au moins en partie en contact avec la paroi tubulaire de la virole.

8. Virole (1) selon l'une quelconque des revendications précédentes, comprenant plusieurs premiers dispositifs de cerclage (18) et plusieurs deuxièmes dispositifs de cerclage (20) installés en alternance longitudinalement les uns à la suite des autres.

9. Colonne de séparation gaz/liquide comprenant une virole équipée d'au moins un tronçon de garnissage, l'au moins un tronçon ayant été inséré dans une virole selon l'une des revendications précédentes.

10. Procédé d'installation d'un tronçon de garnissage pour une colonne de séparation gaz/liquide dans une virole (1) selon l'une quelconque des revendications précédentes, le procédé comprenant au moins une étape de montage du premier dispositif de cerclage (18) et du deuxième dispositif de cerclage (20), et au moins une étape d'installation du tronçon de garnissage dans le logement (13) de la virole (1) réalisée à la suite de l'étape de montage du premier dispositif de cerclage (18) et du deuxième dispositif de cerclage (20).

11. Procédé d'installation d'un tronçon de garnissage dans une virole (1) selon la revendication précédente, durant lequel la virole (1) s'étend verticalement au cours de l'étape de montage du premier dispositif de cerclage (18) et du deuxième dispositif de cerclage (20), la virole (1) s'étendant horizontalement au cours de l'étape d'installation du tronçon de garnissage.

12. Colonne de séparation gaz/liquide comprenant une virole équipée d'au moins un tronçon de garnissage, l'au moins un tronçon ayant été installé selon le procédé de la revendication 10 ou 11.

## Patentansprüche

1. Mantel (1), der dazu bestimmt ist, mit mindestens einem Packungsabschnitt für eine Gas/Flüssigkeits-Trennkolonne ausgestattet zu werden, umfassend mindestens eine rohrförmige Wand (4), die sich entlang einer Längsrichtung (L) zwischen zwei Längsenden erstreckt und von der eine Innenseite (10) dazu beiträgt, eine Aufnahme (13) des Packungsabschnitts zu begrenzen, wobei die rohrförmige Wand (4) dazu beiträgt, an einem ihrer Längsenden eine Eingangsöffnung (14) zu begrenzen, wobei der Mantel (1) eine Bodenwand (16) umfasst, die an dem zu der Eingangsöffnung (14) entgegengesetzten Längsende angeordnet ist, **dadurch gekennzeichnet, dass** der Mantel (1) mindestens eine erste Umreifungsvorrichtung (18) und mindestens eine zweite Umreifungsvorrichtung (20) umfasst, die ringartig um die rohrförmige Wand (4) des Mantels (1) herum angeordnet sind, wobei sie in Kontakt mit einer Außenseite (12) der rohrförmigen Wand (4) sind, wobei die erste Umreifungsvorrichtung (18) mindestens einen Verbindungsbereich mit einem Verlagerungssystem (32) des Mantels (1) umfasst, wobei die zweite Umreifungsvorrichtung (20) ein Längsmaß aufweist, das kleiner als ein Längsmaß der ersten Umreifungsvorrichtung (18) ist.

2. Mantel (1) nach dem vorhergehenden Anspruch, wobei das Längsmaß der mindestens einen zweiten Umreifungsvorrichtung (20) mindestens zwei Mal kleiner als das entsprechende Längsmaß der ersten Umreifungsvorrichtung (18) ist.

3. Mantel (1) nach einem der vorhergehenden Ansprüche, wobei die rohrförmige Wand (4) aus mehreren Wandstücken (6) gebildet ist, die entlang der Längsrichtung (L) hintereinander eingerichtet sind, wobei mindestens zwei aufeinander folgende Wandstücke (6) untereinander einen Kontaktbereich (8) bilden, wobei eine der zweiten Umreifungsvorrichtungen (20) um diesen Kontaktbereich (8) herum angeordnet ist.

4. Mantel (1) nach einem der vorhergehenden Ansprüche, wobei eine der zweiten Umreifungsvorrichtungen (20) mindestens in der Nähe der Eingangsöffnung (14) des Mantels (1) angebracht ist.

5. Mantel (1) nach einem der vorhergehenden Ansprüche, wobei eine Innenseite (30) der einen und/oder der anderen der Umreifungsvorrichtungen (18, 20) in einen Kreis mit einem Durchmesser einbeschrieben ist, der größer als der Durchmesser des Kreises ist, in den die Außenseite (12) der rohrförmigen Wand (4) einbeschrieben ist.

6. Mantel (1) nach einem der vorhergehenden Ansprüche, wobei die erste Umreifungsvorrichtung (18) radiale Stege (34) beinhaltet, die durch einen zentralen Streifen (36) miteinander verbunden sind, wobei die radialen Stege (34) von dem zentralen Streifen (36) aus radial nach außerhalb des Mantels (1) abstehen.

7. Mantel (1) nach einem der vorhergehenden Ansprüche, wobei die eine und/oder die andere der Umreifungsvorrichtungen (18, 20) mehrere Teile (22, 24) umfasst, die durch eine Spannvorrichtung (26) fest miteinander verbunden werden, wobei die beiden Teile (22, 24) zwischen einer geöffneten Stellung der Umreifungsvorrichtung, in der die beiden Teile (22, 24) voneinander entfernt sind, und einer geschlossenen Stellung der Umreifungsvorrichtung, in der die beiden Teile (22, 24) den Mantel (1) umschließen, wobei sie mindestens teilweise mit der rohrförmigen Wand des Mantels in Kontakt sind, beweglich sind.

8. Mantel (1) nach einem der vorhergehenden Ansprüche, umfassend mehrere erste Umreifungsvorrichtungen (18) und mehrere zweite Umreifungsvorrichtungen (20), die längs abwechselnd hintereinander angebracht sind.

9. Gas/Flüssigkeits-Trennkolonne, umfassend einen Mantel, der mit mindestens einem Packungsabschnitt ausgestattet ist, wobei der mindestens eine Abschnitt in einen Mantel nach einen der vorhergehenden Ansprüche eingesetzt ist.

10. Verfahren zur Anbringung eines Packungsabschnitts für eine Gas/Flüssigkeits-Trennkolonne in einem Mantel (1) nach einem der vorhergehenden Ansprüche, wobei das Verfahren mindestens einen Schritt der Montage der ersten Umreifungsvorrichtung (18) und der zweiten Umreifungsvorrichtung (20) umfasst und mindestens einen Schritt des Anbringens des Packungsabschnitt in der Aufnahme (13) des Mantels (1), der nach dem Schritt der Montage der ersten Umreifungsvorrichtung (18) und der zweiten Umreifungsvorrichtung (20) ausgeführt wird.

11. Verfahren zur Anbringung eines Packungsabschnitts in einem Mantel (1) nach dem vorhergehenden Anspruch, bei dem sich der Mantel (1) während des Schritts der Montage der ersten Umreifungsvorrichtung (18) und der zweiten Umreifungsvorrichtung (20) vertikal erstreckt, wobei sich der Mantel (1) während des Schritts der Anbringung des Packungsabschnitts horizontal erstreckt.

12. Gas/Flüssigkeits-Trennkolonne, umfassend einen Mantel, der mit mindestens einem Packungsabschnitt ausgestattet ist, wobei der mindestens eine Abschnitt nach dem Verfahren des Anspruchs 10 oder 11 angebracht wird.

## Claims

1. Casing (1) intended to be equipped with at least one section of packing for a gas/liquid separation column comprising at least one tubular wall (4) extending along a longitudinal direction (L) between two longitudinal ends and an internal face (10) of which contributes to delimiting a housing (13) for the section of packing, the tubular wall (4) contributing to delimiting, at one of its longitudinal ends, an entry opening (14), the casing (1) comprising an end wall (16) arranged at the opposite longitudinal end to the entry opening (14), **characterized in that** the casing (1) comprises at least one first hooping device (18) and at least one second hooping device (20) which are positioned annularly around the tubular wall (4) of the casing (1) in contact with an external face (12) of the tubular wall (4), the first hooping device (18) comprising at least one zone of connection with a movement system (32) for the moving of the casing (1), the second hooping device (20) having a longitudinal dimension shorter than a longitudinal dimension of the first hooping device (18).

2. Casing (1) according to the preceding claim, wherein the longitudinal dimension of the at least one second hooping device (20) is smaller by at least a factor of two than the corresponding longitudinal dimension of the first hooping device (18).

3. Casing (1) according to either one of the preceding claims, wherein the tubular wall (4) is formed of several wall portions (6) arranged one after the other in the longitudinal direction (L), at least two successive wall portions (6) between them forming a contact zone (8), one of the second hooping devices (20) being positioned around this contact zone (8).

4. Casing (1) according to any one of the preceding claims, wherein one of the second hooping devices (20) is installed at least in the vicinity of the entry opening (14) of the casing (1).

5. Casing (1) according to any one of the preceding claims, wherein an internal face (30) of one and/or the other of the hooping devices (18, 20) can be inscribed inside a circle of diameter greater than the diameter of the circle inside which the external face (12) of the tubular wall (4) can be inscribed.

6. Casing (1) according to any one of the preceding claims, wherein the first hooping device (18) comprises two low radial walls (34) connected to one another by a central strip (36), the low radial walls (34) projecting radially from the central strip (36) towards the outside of the casing (1).

7. Casing (1) according to any one of the preceding claims, wherein one and/or the other of the hooping devices (18, 20) comprises several parts (22, 24) securely joined to one another by a clamping device (26), the two parts (22, 24) being able to move between a position in which the hooping device is open, in which position the two parts (22, 24) are separated from one another, and a position in which the hooping device is closed, in which position the two parts (22, 24) encircle the casing (1) at least partly in contact with the tubular wall of the casing.

8. Casing (1) according to any one of the preceding claims, comprising several first hooping devices (18) and several second hooping devices (20) installed in an alternating sequence longitudinally one after the other.

9. Gas/liquid separation column comprising a casing equipped with at least one section of packing, the at least one section having been inserted into a casing according to one of the preceding claims.

10. Method for installing a section of packing for a gas/liquid separation column into a casing (1) according to any one of the preceding claims, the method comprising at least a step of mounting the first hooping device (18) and the second hooping device (20), and at least a step of installing the section of packing in the housing (13) of the casing (1), which step is performed after the step of mounting the first hooping device (18) and the second hooping device (20).

11. Method for installing a section of packing into a casing (1) according to the preceding claim, during which method the casing (1) extends vertically during the step of mounting the first hooping device (18) and the second hooping device (20), the casing (1) extending horizontally during the step of installing the section of packing.

12. Gas/liquid separation column comprising a casing equipped with at least one section of packing, the at least one section having been installed according to the method of Claim 10 or 11.
